# EUROPÄISCHE PATENTSCHRIFT

(11) **EP 2 801 531 B1**
(45) Veröffentlichungstag und Bekanntmachung des Hinweises auf die Patenterteilung: **04.01.2017**
(21) Anmeldenummer: 14163926.0
(22) Anmeldetag: 08.04.2014
(51) Int. Cl.: B65B 19/34, B29C 45/17, B65B 35/38, B65B 5/08, B29C 45/42, B65B 35/04

(54) **Verpackungsverfahren, Verpackungsvorrichtung sowie Spritzgussanlage mit Verpackungsvorrichtung**
Packaging method, packaging device and injection moulding machine with packaging device
Procédé d'emballage, dispositif d'emballage et installation de moulage par injection équipée de dispositif d'emballage

(30) Priorität: 08.05.2013 DE 102013104800
(43) Veröffentlichungstag der Anmeldung: 12.11.2014
(73) Patentinhaber: Waldorf Technik GmbH & Co. KG, 78234 Engen (DE)
(72) Erfinder: Czizegg, Wolfgang, 78256 Steisslingen (DE); Jaiter, Werner, 78256 Steißlingen (DE)
(74) Vertreter: Wagner, Kilian

(56) Entgegenhaltungen:
- EP-A1- 2 295 353
- WO-A1-2004/054778
- WO-A1-2008/065035
- WO-A1-2011/003507
- US-A- 4 814 134
- US-A- 5 829 222
- US-A1- 2007 068 121

## Beschreibung

Die Erfindung betrifft ein Verpackungsverfahren zum Verpacken von als Pipettenspitzen oder medizinische Reaktionsgefäße ausgebildeten Spritzgussteilen gemäß dem Oberbegriff des Anspruchs 1 sowie eine Verpackungsvorrichtung gemäß dem Oberbegriff des Anspruchs 14 zum Verpacken von als Pipettenspitzen oder medizinische Reaktionsgefäße ausgebildeten Kunststoffspritzgussteilen. Ferner betrifft die Erfindung eine Spritzgussanlage mit einer derartigen Verpackungsvorrichtung.

Bei bekannten Verpackungsverfahren zum Verpacken von als Pipettenspitzen oder medizinische Reaktionsgefäße, insbesondere zur Blutanalyse, ausgebildeten Kunststoffspritzgussteilen werden gleichzeitig Kunststoffspritzgussteile aus K Kavitäten einer Spritzgussvorrichtung entnommen und als Schüttgut zwischengespeichert. Aus diesem Zwischenspeicher werden dann Enderpackungseinheiten jeweils mit A Kunststoffspritzgussteilen beladen. Nachteilig bei dem bekannten Verfahren ist, dass keine Zuordnung der abgepackten Kunststoffspritzgussteile zu bestimmten Kavitäten möglich ist. Es ist also nicht mehr nachvollziehbar, aus welcher Kavität bzw. aus welchen Kavitäten die Kunststoffspritzgussteile einer bestimmten Enderpackungseinheit stammen. Dies führt bei nur einem einzigen fehlerhaften Kunststoffspritzgussteil in einer Endverpackungseinheit dazu, dass die gesamte Produktion zurückgerufen werden muss und nicht nur die mit Kunststoffspritzgussteilen aus einer bestimmten Kavität bzw. aus bestimmten Kavitäten bestückten Endverpackungseinheiten.

Ein bezüglich des vorstehend geschilderten Problems verbessertes Verpackungsverfahren sieht vor, die als Pipettenspitzen oder medizinische Reaktionsgefäße ausgebildeten Kunststoffspritzgussteile ohne Ablage in einem Zwischenspeicher unmittelbar d.h. ohne Zwischenspeicherung aus den Kavitäten in die Enderpackungseinheiten zu überführen. Hierzu werden die Kunststoffspritzgussteile über Schläuche zu den Enderpackungseinheiten gefördert. Nachteilig hierbei ist, dass die Anzahl A von in einer Endverpackungseinheit zu befördernden Kunststoffspritzgussteilen der Anzahl K Kavität entsprechen muss oder dass die Anzahl A von in einer Endverpackungseinheit zu überführenden Kunststoffspritzgussteile ein ganzzahliges Vielfaches der Anzahl K Kavitäten sein muss. Insbesondere nachteilig bei einer derartigen Anlage ist der enorme Raumbedarf für das Schlauchpaket und die vergleichsweise langsame Zykluszeit.

Ein hinsichtlich des vorstehenden Problems verbessertes Verpackungsverfahren sowie eine zugehörige Verpackungsvorrichtung hat die Anmelderin in der EP 2 323 930 B1 (WO 2011/003507 A1) beschrieben. Das verbesserte Verfahren sieht vor, dass die gleichzeitig aus den K Kavitäten entnommenen K Kunststoffspritzgussteile gleichzeitig auf U Untergruppen verteilt in einem Zwischenspeicher abgelegt werden und dass mehrfach und solange K Kunststoffspritzgussteile aus den K Kavitäten entnommen und gleichzeitig auf die U Untergruppen in dem Zwischenspeicher, d.h. vor dem Überführen in die Endverpackungen verteilt werden, bis jede Untergruppe L Kunststoffispritzgussteile aufweist, wobei die Anzahl L der Kunststoffspritzgussteile einer Untergruppe der Anzahl A von in eine Endverpackungseinheit maximal zu ladenden Kunststoffspritzgussteilen oder einem ganzzahligen Teiler von A entspricht. Dieses Verfahren hat sich bewährt, es bestehen jedoch Bestrebungen die Zykluszeiten des Verpackungsverfahrens zum Verpacken von als Pipettenspitzen oder medizinische Reaktionsgefäße ausgebildeten Kunststoffspritzgussteilen zu verbessern.

Aus der US 4,814,134 A ist ein Verfahren und eine Vorrichtung zum Verpacken von Essbesteck beschrieben, wobei das Besteck mit Hilfe von verstellbaren Fingern eines Entnahmewerkzeugs relativ zueinander ausgerichtet wird. Am Ende dieses Ausrichtvorgangs werden die Kunststoffspritzgussteile verpackt, wobei sämtliche Kunststoffspritzgussteile eines Schusses in eine gemeinsame Endverpackungseinheit gelangen.

Die WO 2004/054778 A1 beschreibt eine Vorrichtung zum Verpacken von Spritzgussteilen in Endverpackungen, wobei die Kunststoffspritzgussteile in einer horizontalen Ablageebene durch einen Roboterarm mit entsprechenden Greifwerkzeugen abgelegt werden.

Ausgehend von dem vorgenannten Stand der Technik liegt der Erfindung die Aufgabe zugrunde ein hinsichtlich der Zykluszeit optimiertes Verpackungsverfahren zum Verpacken von als Pipettenspitzen oder medizinische Reaktionsgefäße ausgebildeten Kunststoffspritzgussteilen sowie eine entsprechend verbesserte Verpackungsvorrichtung und eine Spritzgussanlage mit einer solchen Verpackungsvorrichtung anzugeben, wobei das Verfahren gewährleisten soll, dass nachvollziehbar ist, aus welcher Kavität bzw. aus welchen Kavitäten die Kunststoffspritzgussteile einer Endverpackungseinheit entstammen und bei dem die Anzahl A der maximal in einer Endverpackungseinheit zu beladenden Kunststoffspritzgussteile unabhängig wählbar ist von der fixen Anzahl K an Kavitäten eines Spritzgusswerkzeugs. Darüber hinaus soll der Aufbau der Vorrichtung möglichst einfach und robust sein und ferner soll das Risiko von Beschädigungen der Kunststoffspritzgussteile minimiert werden.

Diese Aufgabe wird hinsichtlich des Verpackungsverfahrens mit den Merkmalen des Anspruchs 1, hinsichtlich der Verpackungsvorrichtung mit den Merkmalen des Anspruchs 14 und hinsichtlich der Spritzgussanlage mit den Merkmalen des Anspruchs 16 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, auf einen in dem bekannten, einen Ablagegreifer umfassenden Verfahren zur Anwendung kommenden Zwischenspeicher zur Bildung der Untergruppen zu verzichten und stattdessen die Untergruppen mittels eines Ablagegreifers unmittelbar gleichzeitig in einer einzigen Endverpackungseinheit oder alternativ gleichzeitig und bevorzugt in mehreren Endverpackungseinheiten zu bilden. Anders ausgedrückt wird die einzige Endverpackungseinheit oder werden die mehreren Endverpackungseinheiten schrittweise aufgefüllt, indem mehrfach hintereinander gleichzeitig K Kunststoffspritzgussteile auf die Untergruppen in der einzigen Endverpackungseinheit oder in den mehreren Endverpackungseinheiten verteilt werden. Dabei werden solange jedesmal nach einer Entnahme und/oder einer erfolgten Ablage Kunststoffspritzgussteile auf die Untergruppen in der einzigen Endverpackungseinheit oder den mehreren Endverpackungseinheiten verteilt, bis jede Endverpackungsseinheit mit A Kunststoffspritzgussteilen, d.h. der maximal möglichen in diese einsetzbaren Teilezahl befüllt ist. Wie später noch erläutert werden wird, kann das Aufteilen der Kunststoffspritzgussteile auf die Untergruppen ohne vorheriges Absetzen der Kunststoffspritzgussteile erfolgen, beispielsweise indem die Kunststoffspritzgussteile unmittelbar mittels eines Entnahmegreifers zum Entnehmen der K Spritzgussteile aus den K Kavitäten in die Endverpackungseinheiten überführt werden oder alternativ mittels eines Übergabegreifers, der Kunststoffspritzgussteile von einem Entnahmegreifer unmittelbar übernimmt oder mittels eines weiteren Übergabegreifes, der die Teile von mindestens einem Übergabegreifer übernimmt. Der Ablagegreifer wird also bevorzugt entweder von dem Entnahmegreifer oder einem Übergabegreifer gebildet. Auch ist es möglich und bevorzugt, die K Kunststoffspritzgussteile in einem Zwischenpuffer zwischenzupuffern, wobei der Zwischenpuffer ausschließlich die K Kunststoffspritzgussteile eines einzigen Schusses aufnimmt und nicht ein Vielfaches von K-Spritzgussteilen mehrerer Spritzgussschüsse. In den Zwischenpuffer können die Kunststoffspritzgussteile mittels des Entnahmegreifers oder bevorzugt mittels eines Übergabegreifers abgelegt werden. Die Ablage in die Endverpackungseinheit(en) erfolgt dann mit dem Ablagegreifer, mit dem bevorzugt die Kunststoffspritzgussteile auch aus dem Zwischenpuffer entnommen werden.

Grundsätzlich ist es möglich, dass die Anzahl der gleichzeitig mittels eines Ablagegreifers mit Kunststoffspritzgussteilen zu befüllenden Endverpackungseinheiten der Anzahl K Kavitäten entspricht. In diesem Fall werden die Endverpackungseinheiten kavitätenrein befüllt, d.h. jede Endverpackungseinheit erhält eine einzige Untergruppe bevorzugt mit Kunststoffspritzgussteilen aus einer einzigen Kavität. Es ist jedoch auch möglich und bevorzugt, dass weniger Endverpackungseinheiten gleichzeitig befüllt werden als Kavitäten vorhanden sind. In diesem Fall erhält jede Endverpackungseinheit bevorzugt gleich viele Untergruppen, bevorzugt jeweils mindestens zwei Untergruppen, wobei die mindestens zwei Untergruppen jede Endverpackungseinheit gleichzeitig bei einem Ablageschritt um jeweils mindestens ein, vorzugsweise ausschließlich ein Kunststoffspritzgussteil erweitert werden. Im Extremfall ist es denkbar, gleichzeitig nur eine einzige Endverpackungseinheit zu befüllen - diese erhält dann bei jedem Ablageschritt sämtliche Kunststoffspritzgussteile sämtlicher Kavitäten. Bevorzugt ist es jedoch, wenn gleichzeitig mindestens zwei Endverpackungseinheiten befüllt werden, d.h. wenn die Gruppen in mindestens zwei Endverpackungseinheiten gleichzeitig gebildet bzw. erweitert werden, bis die Endverpackungseinheiten vollständig jeweils mit der maximal möglichen Anzahl A Kunststoffspritzgussteilen befüllt sind.

In den Endverpackungseinheiten werden die Kunststoffspritzgussteile jeweils in einer, bevorzugt horizontalen Ablageebene nebeneinander abgelegt, wobei es besonders bevorzugt ist, wenn im Falle des gleichzeitigen Befüllens mehrerer Endverpackungseinheiten diese in einer gemeinsamen Ebene angeordnet sind bzw. eine gemeinsame Ablageebene bilden.

Durch den Verzicht auf eine Gruppierung der Kunststoffspritzgussteile zu jeweils mehrere Kunststoffspritzgussteile umfassenden Untergruppen in einem Zwischenspeicher kann die Gesamtvorrichtung einfacher und kostengünstiger realisiert werden. Durch den Verzicht auf die bei anderen bekannten Verfahren zum Einsatz kommenden Schlauchpakete und stattdessen die Verwendung mindestens eines Ablagegreifers, vorzugsweise mehrerer Greifer wird der Aufbau weiter vereinfacht und das Beschädigungsrisiko der Kunststoffspritzgussteile minimiert. Ferner wird Abtrieb vermieden, der bei der medizinischen Anwendung von Nachteil ist.

Wesentlich ist es, dass es sich bei den Verpackungseinheiten, in denen die Untergruppen gebildet werden, um Endverpackungseinheiten handelt, die nach der vollständigen Befüllung zu Endkunden ausgeliefert werden, wobei es sich bei dem Auslieferungsschritt an den Endkunden bzw. die Übergabe an eine Spedition oder dergleichen Transporteinheit um einen weiterbildungsgemäßen Verfahrensschritt handelt, der hiermit als beanspruchbar offenbart gelten soll.

Bevorzugt sind die Endverpackungen dabei so dimensioniert, dass sie entweder 32, 48, 60, 84, 96, 105 oder 120 Kunststoffspritzgussteile beinhalten. Bevorzugt werden die Endverpackungseinheiten zu den Endkunden in Umverpackungen geliefert, wobei entweder die Endverpackungen einzeln, d.h. jeweils mit einer Umverpackung versehen werden oder alternativ mehrere Endverpackungen gruppiert und gemeinsam mit einer Umverpackung, beispielsweise einem Umkarton oder einer Folienverpackung versehen werden. Bei dem zum Einsatz kommenden Endverpackungen handelt es sich ausdrücklich nicht um Werkstückträger zur Zwischenlagerung, aus denen heraus dann in einem zeitlich später gelagerten Schritt, insbesondere nach einer Lagerzeit in einem Zwischenlager, Endverpackungseinheiten verpackt werden. Auch handelt es sich nicht um innerhalb Verpackungsvorrichtung rotierende bzw. in dieser verbleibende Zwischenspeicher, wie die in der EP 2 323 930 B1 beschriebenen Zwischenspeicher, aus welchen dann erst die Endverpackungseinheiten befüllt werden.

Wesentlich ist also, dass die Endverpackungen nicht dauerhaft in der Verpackungsvorrichtung verbleiben und damit beispielsweise rotieren, sondern dem Verpackungsprozess mittels geeigneter Zuführmittel zugeführt werden und nach dem Beladen aus der Verpackungsvorrichtung mittels geeigneter Ausschleusmittel ausgeschleust werden.

Bevorzugt besteht jede Endverpackungseinheiten aus einem mehrere Öffnungen zur jeweiligen Aufnahme eines Kunststoffspritzgussteils aufweisenden Träger, beispielsweise aus Kunststoff oder Metall. Ganz besonders bevorzugt handelt es sich um metallische Träger, beispielsweise aus Aluminium, die hoch präzise gefertigt sind und die nach deren bestimmungsgemäßer Verwendung beim Endkunden, insbesondere in einem Analysegerät, leer zum Verpackungsprozess zurückgelangen und wieder befüllt werden können. Zusätzlich oder alternativ zu den jeweils A Öffnungen bzw. Vertiefungen können die Endverpackungseinheiten A Aufsteckelemente zum Aufstecken der Kunststoffspritzgussteile aufweisen.

Alternativ handelt es sich bei den Endverpackungseinheiten um Wegwerfträger (Einwegträger), z.B. aus Kunststoff. Unabhängig von der Materialwahl des Trägers sind diese bevorzugt ausgebildet und bestimmt, um in einem Analysegerät, insbesondere in einem Blutanalysegerät eingesetzt zu werden. Bevorzugt sind die Träger so auf bekannte Analysegeräte abgestimmt, dass diese in diese eingesetzt werden können, so dass die Analysegeräte, bevorzugt automatisch, Pipettenspitzen oder medizinische Reaktionsgefäße aus dem Träger entnehmen können.

Idealerweise wird das nach dem Konzept der Erfindung ausgebildete Verfahren angewendet, wenn die Anzahl der pro Endverpackungseinheit vorzusehenden A Kunststoffspritzgussteile nicht der Anzahl der Kavitäten oder nicht einem ganzzahligen Vielfachen der Anzahl an Kavitäten spricht.

Im Hinblick auf die Anzahl der Endverpackungseinheiten, die mit (jeweils ausschließlich) A Kunststoffspritzgussteilen befüllt werden, in dem in der Endverpackungseinheiten die Untergruppen gebildet werden, gibt es unterschiedliche Möglichkeiten. So ist es denkbar, gleichzeitig immer nur eine einzige Endverpackungseinheit aufzufüllen, bis diese A Kunststoffspritzgussteile enthält, wobei dann bevorzugt nacheinander mehrere Endverpackungseinheiten mit jeweils A Kunststoffspritzgussteilen befüllt werden. Alternativ ist es möglich, gleichzeitig mehrere Endverpackungseinheiten mit Kunststoffspritzgussteilen aufzufüllen, bis jede dieser Endverpackungseinheiten A Kunststoffspritzgussteile enthält. Wird nur eine einzige Endverpackungseinheit gleichzeitig aufgefüllt, so bildet diese Endverpackungseinheit eine Ablageebene. Bevorzugt bilden für den Fall des gleichzeitigen Auffüllens mehrere Endverpackungseinheiten diese gemeinsam eine, bevorzugt horizontale, Ablageebene

Wie eingangs bereits angedeutet, ist es möglich, die K Kunststoffspritzgussteile, ohne diese in einem eine Ablageebene, insbesondere eine Horizontalebene definierenden Zwischenpuffer kurzzeitig abzulegen, in die einzige Endverpackungseinheit oder gleichzeitig in mehrere Endverpackungseinheiten zu überführen. Dies kann bei Inkaufnahme vergleichsweise langer Zykluszeiten dadurch realisiert werden, dass die Überführung in die Untergruppen mittels eines Entnahmegreifers (ist dann gleich der Ablagegreifer) erfolgt, mit welchem die Kunststoffspritzgussteile aus den Kavitäten entnommen werden. Bevorzugt ist es jedoch, wenn die K Kunststoffspritzgussteile von dem Entnahmegreifer auf einen Übergabegreifer übergeben werden und von diesem oder einem weiteren Übergabegreifer in der einzigen Verpackungseinheit oder in den mehreren Verpackungseinheiten abgelegt werden, wobei dann der Ablagegreifer ein Übergabegreifer ist.

Alternativ ist es möglich und zur weiteren Geschwindigkeitsoptimierung bevorzugt, wenn die K Kunststoffspritzgussteile vor dem Verteilen auf die U Untergruppen in der einzigen Endverpackungseinheit oder in den mehreren Endverpackungseinheiten in einem Zwischenpuffer zwischengepuffert werden, wobei der Zwischenpuffer bevorzugt so dimensioniert ist und/oder so angesteuert wird, dass in diesem ausschließlich ein Schuss mit K Kunststoffspritzgussteile zwischengepuffert wird, wobei das Zwischenpuffern alternativ mit dem Entnahmegreifer oder bevorzugt mittels eines Übergabegreifers erfolgen kann, mit welchem die Kunststoffspritzgussteile vom Entnahmegreifer übernommen werden. Die Ablage in die Endverpackungseinheit(en) erfolgt dann bevorzugt mittels eines Ablagegreifers.

Ganz besonders bevorzugt ist weiterbildungsgemäß vorgesehen, dass der Zwischenpuffer z.B. translatorisch oder rotatorisch verstellbar ist zwischen einer Beladeposition, in welcher er mit einem Schuss von K Kunststoffspritzgussteilen beladen wird und einer Entnahmeposition, in welcher die Kunststoffspritzgussteile mittels eines Greifers, insbesondere dem Ablagegreifer (oder einem Übergabegreifer zur Übergabe an den Ablagegreifer) entnommen und auf die U Untergruppen in der einzigen Enderpackungseinheit oder den mehreren Verpackungseinheiten verteilt werden. Dabei ist es ganz besonders bevorzugt, wenn die Entnahme der Kunststoffspritzgussteile aus dem Zwischenspeicher in ausschließlich einer Vertikalbewegung erfolgt, wobei es weiter bevorzugt ist, wenn nach der Entnahme und vor der Beladung der einzigen Endverpackungseinheit oder der mehreren Endverpackungseinheiten der Zwischenpuffer wieder aus der Entnahmeposition in Richtung der Beladeposition verfährt.

Besonders zweckmäßig ist es, wenn die Kunststoffspritzgussteile einer bestimmten Kavität immer einer bestimmten Untergruppe zugeordnet werden, um den Herstellungsweg optimal nachvollziehen zu können. Für den Fall, dass eine Untergruppe, gleichzeitig oder nacheinander, aus mehreren Kavitäten bestückt wird, ist es von Vorteil, wenn dieser Zusammenhang gleich bleibt, und zumindest eine Aussage darüber treffen zu können, aus welchen Kavitäten die Kunststoffspritzgussteile einer Endverpackungseinheit entstammen und somit im Fehlerfall die Suche eingrenzen zu können und nur bestimmte, entsprechend gekennzeichnete Verpackungseinheiten rückrufen zu müssen.

Besonders zweckmäßig ist es, wenn jede Untergruppe nach jedem Entnahmezyklus immer um die gleiche Anzahl von Kunststoffspritzgussteilen, vorzugsweise um ein einziges Kunststoffspritzgussteil, erweitert wird, wobei auch eine Ausführungsform realisierbar ist, bei der die Anzahl der in einer Untergruppe zu überführenden Kunststoffspritzgussteile von Ablagezyklus zu Ablagezyklus schwankt.

Besonders zweckmäßig ist es, wenn die Untergruppen als zusammengehörige Einheit in der einzigen Endverpackungseinheit oder den mehreren Endverpackungseinheiten abgebildet bzw. abgelegt werden, so dass die Kunststoffspritzgussteile einer Untergruppe in einer festen Relativposition zueinander angeordnet sind. Ganz besonders bevorzugt ist es, wenn die Untergruppen in der einzigen Endverpackungseinheit oder den mehreren Endverpackungseinheiten erkennbar sind, was dadurch realisiert werden kann, dass die Untergruppen mit Abstand zueinander angeordnet werden, was jedoch nicht zwingend ist. Wesentlich ist lediglich, dass eine Steuereinheit die Position der zu einer bestimmten Untergruppe gehörenden Kunststoffspritzgussteile kennt. Daher können grundsätzlich mehrere Kunststoffspritzgussteile unterschiedlicher Untergruppen unmittelbar nebeneinander angeordnet werden.

Die Erfindung führt auch auf eine Verpackungsvorrichtung, die vorzugsweise zur Durchführung eines wie zuvor beschrieben ausgestalteten Verpackungsverfahrens ausgebildet ist. Die Verpackungsvorrichtung umfasst Entnahmemittel zum gleichzeitigen Entnehmen von K Kunststoffspritzgussteilen aus K Kavitäten. Ferner umfasst die Verpackungsvorrichtung einen Ablagegreifer umfassende Ablagemittel die ausgebildet sind zum gleichzeitigen Ablegen der K Kunststoffspritzgussteile, gleichmäßig verteilt auf U-Untergruppen, wobei im einfachsten Fall die Abgabemittel von den Entnahmemitteln gebildet sind. Es können auch voneinander separate Entnahmemittel und Ablagemittel vorgesehen sein, was bevorzugt ist. Ferner umfasst die Verpackungsvorrichtung Zuführmittel zum Zuführen von Endverpackungseinheiten zum Verpackungsprozess sowie Ausschleusmittel zum Ausschleusen von befüllten Verpackungseinheiten aus der Verpackungsvorrichtung, insbesondere um die Endverpackungseinheiten einer Umverpackungsvorrichtung zuführen zu können.

Ferner umfasst die Verpackungsvorrichtung eine Steuereinheit zum Ansteuern der Entnahmemittel und/oder der Ablagemittel, wobei die Steuereinheit die Entnahmemittel und/oder die Ablagemittel derart ansteuernd ausgebildet ist, dass mehrfach K Kunststoffspritzgussteile aus den K Kavitäten entnommen werden und gleichmäßig auf die U Untergruppen verteilt werden, bis jede Untergruppe L Kunststoffspritzgussteile aufweist, wobei die Anzahl L der Kunststoffspritzgussteile einer Untergruppe der Anzahl A in einer Endverpackungseinheit maximal aufnehmbaren Kunststoffspritzgussteilen oder einem ganzzahligen Teiler von A entspricht. Ferner sind die Steuermittel derart ausgebildet, dass sie die Entnahmemittel und/oder die Ablagemittel derart ansteuern, dass eine einzige Endverpackungseinheit mit A Kunststoffspritzgussteilen aufgefüllt wird oder dass gleichzeitig mehrere Endverpackungseinheiten jeweils mit A Kunststoffspritzgussteilen aufgefüllt werden, wobei die A Kunststoffspritzgussteile in der einzigen Endverpackungseinheit oder in den mehreren Endverpackungseinheiten in einer gemeinsamen, insbesondere horizontalen Ablageebene abgelegt werden. Erfindungsgemäß ist nun vorgesehen, dass die Steuereinheit die Ablagemittel derart ansteuernd ausgebildet ist, dass diese die K Kunststoffspritzgussteile auf die Untergruppen ausschließlich beim Auffüllen der einzigen Endverpackungseinheit in der Endverpackungseinheit oder beim Auffüllen der mehreren Endverpackungseinheiten in den Verpackungseinheiten gruppiert, d.h. ausdrücklich nicht in einem Zwischenspeicher, sondern die Endverpackungseinheiten werden ohne Vorgruppierung der Kunststoffspritzgussteile jeweils mit mehreren Kunststoffspritzgussteile umfassenden Untergruppen beladen, wobei die Untergruppenerweiterung in der Endverpackungseinheit(en) erfolgt. Gegebenenfalls erfolgt eine Zwischenpufferung jeweils eines einzigen Schusses von K Kavitäten in einem Zwischenpuffer der dann ebenfalls Teil der Verpackungsvorrichtung ist. Die Steuereinheit steuert die Ablage ferner derart an, dass die einzige Endverpackung oder dass die mehreren Endverpackungen vollständig mit jeweils A Kunststoffspritzgussteilen befüllt wird/werden.

Unter einem Greifer, z.B. einem Entnahmegreifer, einem Übergabegreifer oder einem Ablagegreifer im Sinne der Erfindung werden neben mechanischen Greifern auch sogenannte Vakuumgreifer verstanden, die die Kunststoffspritzgussteile mittels Unterdruck ansaugen und dadurch halten bzw. greifen.

Im Hinblick auf die Ausbildung der Zuführ- und/oder Ausschleusemittel gibt es unterschiedliche Möglichkeiten. Besonders bevorzugt ist eine Ausführungsform, bei der es sich zumindest teilweise um kombinierte Zuführ- und Ausschleusemitel handelt, die beispielsweise ein gemeinsames Transportband oder einen gemeinsam rotierbaren Tisch umfassen, wobei im Falle des Vorsehens eines rotierbaren Tisches mit diesem an eine Beladeposition zur Beladung mittels des Ablagegreifers eine einzige Endverpackungseinheit oder gleichzeitig mehrere Verpackungseinheiten transportiert und nach dem vollständigen Befüllen jeweils mit A Kunststoffspritzgussteilen aus der Beladeposition weg rotiert werden und so aus der Verpackungsvorrichtung ausgeschleust werden. Gegebenenfalls werden die Verpackungseinheiten von dem Drehtisch wieder dem anliefernden Transportband zugeführt. Auch ist es denkbar die einzige Endverpackungseinheit oder die mehreren Endverpackungseinheiten unmittelbar auf einem Transportband zu füllen oder nach dem Befüllen nicht auf ein anlieferndes Transportband sondern ein davon unterschiedliches abführendes, bzw. ausschleusendes Transportband zu befördern. Auch ist es möglich als, z.B. kombinierte Zuführund/oder Ausschleusemittel umlaufende Werkstückträger vorzusehen, auf den die Endverpackungseinheiten zeitweise transportiert werden, wobei die Endverpackungen leer auf die Werkstückträger aufgesetzt und in befülltem Zustand wieder von diesem, insbesondere mittels eines Greifers abgenommen werden.

Die Erfindung führt auch auf eine Spritzgussanlage mit einer K Kavitäten zum gleichzeitigen Herstellen von K Kunststoffspritzgussteilen aufweisenden Spritzgussvorrichtung, wobei die Spritzgussanlage, insbesondere das Spritzgusswerkzeug zur Herstellung von als Pipettenspitzen oder medizinische Reaktionsgefäße ausgebildeten Kunststoffspritzgussteile ausgebildet ist. D.h. sie weist ein entsprechendes Werkzeug auf. Die Spritzgussanlage umfasst mindestens eine, vorzugsweise ausschließlich eine, wie zuvor beschrieben, ausgebildete Verpackungsvorrichtung. Grundsätzlich ist es auch möglich, mehrere Verpackungsvorrichtungen parallel zu betreiben, wobei bevorzugt jeder Verpackungsvorrichtung eine eigene Spritzgussvorrichtung zugeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Spritzgussvorrichtung mit einer Spritzgussform, die in dem gezeigten Ausführungsbeispiel eine fixe Anzahl von K = 16 Kavitäten zum gleichzeitigen Herstellen von K als Pipettenspitzen oder medizinische Reaktionsbehälter ausgebildeten Kunststoffspritzgussteilen aufweist,
- Fig. 2a und 2b:: vier Endverpackungseinheiten nach jeweils einer unterschiedlichen Anzahl von Ablagezyklen, wobei in dem gezeigten Ausführungsbeispiel in jeder Endverpackungseinheit zwei Untergruppen entstehen (alternativ nur eine einzige Gruppe oder mehr als zwei Untergruppen), die bei jedem Ablagezyklus, bzw. nach jedem Entnahmezyklus, d.h. nach jedem Schuss jeweils um ein Kunststoffspritzgussteil erweitert werden,
- Fig. 3a bis 3e:: eine Spritzgussanlage mit einer Spritzgussvorrichtung und einer Verpackungseinrichtung in unterschiedlichen Betriebszuständen, wobei ausgehend von Fig. 3a bis Fig. 3e ein vollständiger Verpackungszyklus zum Befüllen einer Endverpackungseinheit gezeigt ist.

In den Figuren sind gleiche Elemente und Elemente mit der gleichen Funktion mit den gleichen Bezugszeichen gekennzeichnet.

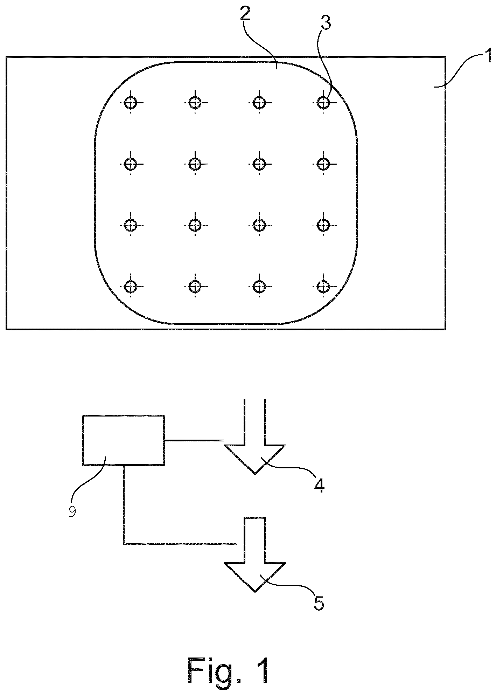

In Fig. 1 ist als Teil einer Spritzgussanlage eine Spritzgussvorrichtung 1, umfassend ein Spritzgusswerkzeug 2, mit K = 16 Kavitäten 3 zum gleichzeitigen Herstellen von K = 16 als Pipettenspitzen oder medizinische Reaktionsgefäße ausgebildeten Kunststoffspritzgussteilen 8 gezeigt.

Der Spritzgussvorrichtung 1 sind beispielsweise als Sauggreifer, vorzugsweise mit einer der Anzahl K der Kavitäten entsprechenden Anzahl an Saugelementen, ausgebildete Entnahmemittel 4 zugeordnet, die lediglich stilisiert als Pfeil angedeutet sind, wobei die Entnahmemittel Teil einer nicht mit einem Bezugszeichen versehenen Verpackungsvorrichtung sind. Die Entnahmemittel 4 dienen in dem gezeigten Ausführungsbeispiel ausschließlich zur Entnahme der Spritzgussteile 8 aus den Kavitäten 3, wobei die mittels der Entnahmemittel 4 entnommenen Spritzgussteile 8 an einen Übergabegreifer von Ablagemitteln 5 übergeben werden, mit welchen dann die unmittelbare Ablage und gleichzeitige Gruppierung zu Untergruppen in den Endverpackungseinheiten vorgenommen wird. Der Übergabegreifer bildet in diesem Fall den erfindungsgemäßen Ablagegreifer. Alternativ ist es möglich, dass die Kunststoffspritzgussteile 8 von den Entnahmemitteln 4 oder einem diesem zugeordneten Übergabegreifer zunächst in einem Zwischenpuffer abgelegt werden, wobei es bevorzugt ist, wenn der Zwischenpuffer nach der Beladung mit den Kunststoffspritzgussteilen 8 zu einem Ablagegreifer von Ablagemitteln verfährt, mit welchen dann die Spritzgussteile 8 aus dem Zwischenpuffer entnommen und in die Endverpackungseinheiten gruppiert überführt werden. Bevorzugt umfassen die Entnahmemittel 4, die Ablagemittel und ggf. vorgesehene zusätzliche Übergabemittel jeweils mindestens einen Greifer, wobei der Greifer noch weiter bevorzugt eine der Anzahl K von Kavitäten entsprechende Anzahl von Greifmöglichkeiten aufweist. Die Greifer können als mechanische Greifer und/oder als Unterdruckgreifer ausgebildet sein.

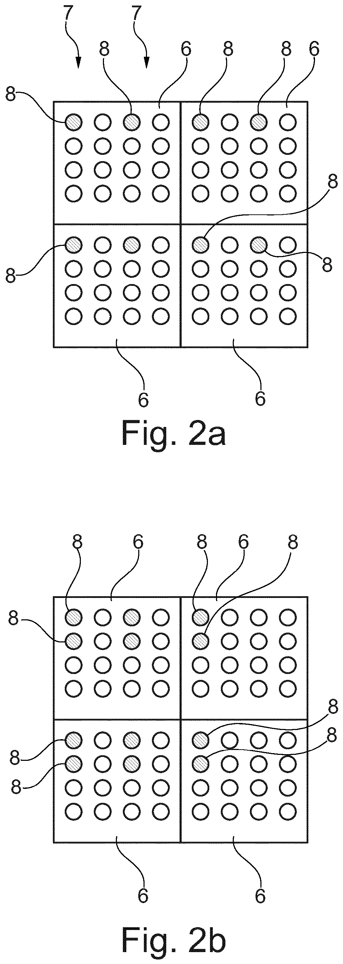

In den Fig. 2a und 2b sind jeweils vier Endverpackungseinheiten 6 dargestellt, die bei jedem Ablageschritt gleichzeitig befüllt werden. In dem gezeigten Ausführungsbeispiel weist jede Endverpackungseinheit A = 16 Ablageplätze zur maximalen Aufnahme von A = 16 Kunststoffspritzgussteilen 8 auf, wobei A (anstatt 16) auch jede andere ganze Zahl sein kann. In dem gezeigten Ausführungsbeispiel besteht die Aufgabe darin, jede Endverpackungseinheit 6 mit jeweils U = zwei Untergruppen 7 von Kunststoffspritzgussteilen 8 zu befüllen, wobei jede Untergruppe 7 in dem gezeigten Ausführungsbeispiel kavitätenrein sein sollen, d.h. Kunststoffspritzgussteile nur aus einer bestimmten Kavität beinhalten soll. Jede Untergruppe besteht in dem gezeigten Ausführungsbeispiel aus L = acht Kunststoffspritzgussteilen 8. Zur vollständigen Befüllung der Endverpackungen 6 sind also insgesamt acht Entnahme- und Ablagezyklen notwendig, wenn bei jedem Ablagezyklus jede Untergruppe 7 um ein Kunststoffspritzgussteil 8 erweitert wird und gleichzeitig zwei Kunststoffspritzgussteile 8 pro Endverpackungseinheit 6 abgelegt werden. Fig. 2a zeigt dabei die Befüllsituation nach einem einzigen Ablagezyklus und Fig. 2b nach zwei aufeinander folgenden Ablagezyklen. Eine Vorgruppierung der Kunststoffspritzgussteile 8 in einem Zwischenspeicher erfolgt ausdrücklich nicht. Auf einen solchen Zwischenspeicher wird erfindungsgemäß verzichtet. Stattdessen erfolgt die Gruppierung unmittelbar in den Endverpackungen 6 mit Hilfe von einem Greifer umfassenden Ablagemitteln 5.

Sämtliche Endverpackungseinheiten 6 sind, wie zuvor beschrieben, mit jeweils mehreren, kavitätenreinen Untergruppen 7 zu befüllen. Hierzu steuert eine in Fig. 1 angedeutete Steuereinheit 9 die Entnahmemittel 4 und die Ablagemittel 5 entsprechend an und ggf. einen zusätzlich vorgesehenen Übergabegreifer zur Befüllung eines Zwischenpuffers, welcher für den Fall, dass dieser verstellbar ausgebildet ist, ebenfalls von der Steuereinheit 9 entsprechend ansteuerbar ist.

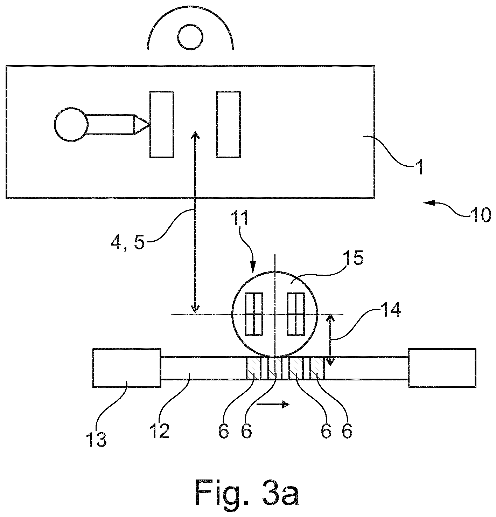

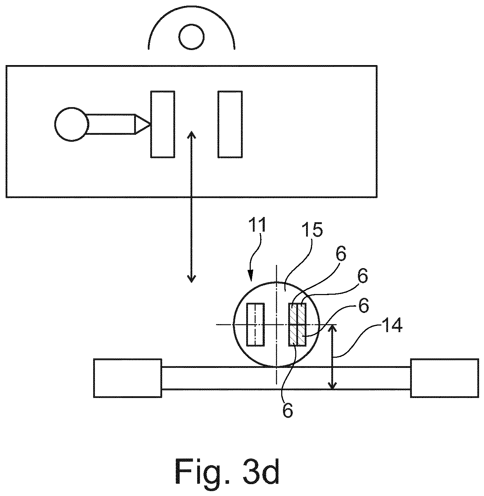

In den Fig. 3a bis 3e ist der Ablauf der Befüllung von Endverpackungseinheiten 6 Schritt für Schritt am Beispiel einer gesamten Spritzgussanlage 10, umfassend eine Verpackungsvorrichtung 16 dargestellt. Zu erkennen ist eine Spritzgussvorrichtung 1 aus der Spritzgussteile entnommen werden und in den Endverpackungen zu Untergruppen gruppiert werden, ggf. (nicht dargestellt) unter Zwischenpufferung jeweils nur eines einzigen Schusses in einem Zwischenpuffer. Die Entnahme der Kunststoffspritzgussteile 8 aus den Kavitäten und die Ablage in die Endverpackungseinheiten 6 erfolgt mit Entnahmemitteln 4 und Ablagemitteln 5.

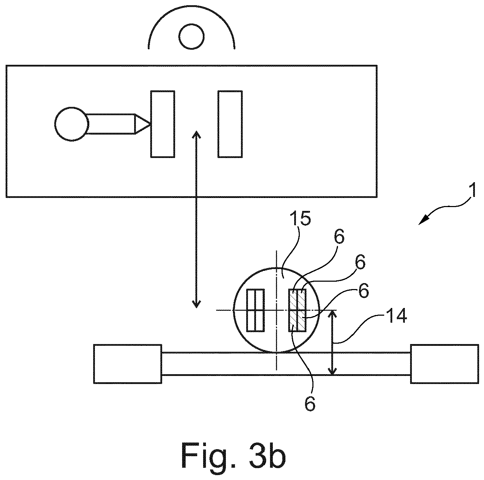

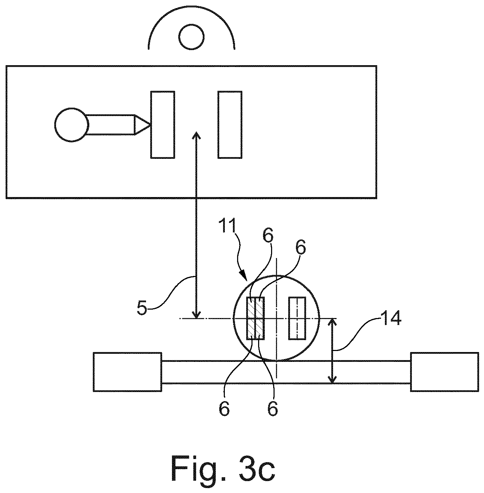

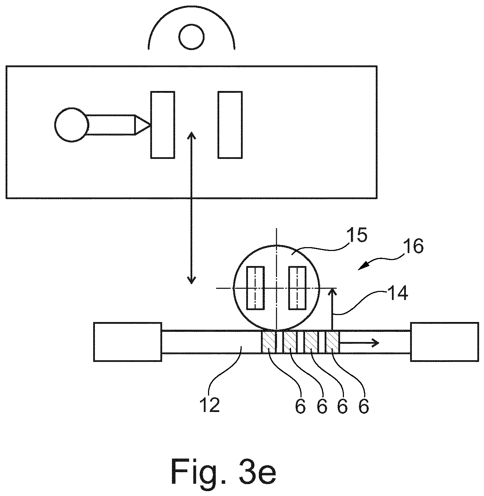

Um Endverpackungseinheiten 6 mit Hilfe der Ablagemittel 5 in Gruppen von Kunststoffspritzgussteilen 8 befüllen zu können, müssen diese an eine Beladeposition 11 befördert werden, in welcher sie dann mittels des Ablagegreifers (Sauggreifer und/oder Mechanikgreifer) der Ablagemittel befüllt werden. Zu diesem Zweck ist zunächst ein anlieferndes Förderband 12 vorgesehen, auf welchem in dem gezeigten Ausführungsbeispiel zunächst sechs leere Endverpackungseinheiten 6 von einem Vorrat 13 angeliefert werden. Die vier noch leeren Endverpackungseinheiten 6 werden mit einer Übergabeeinrichtung 14 auf einen Drehtisch 15 transportiert, wobei die Beladeposition 11 alternativ auch unmittelbar mittels eines Förderbandes anfahrbar ist. In Fig. 3b ist nun zu erkennen, dass die vier leeren Endverpackungseinheiten 6 auf den Drehtisch 15 überführt wurden. Dieser wird nun so verdreht, in dem gezeigten Ausführungsbeispiel beispielhaft um 180°, so dass, wie aus Fig. 3c zu erkennen ist, die vier noch leeren Endverpackungseinheiten 6 in die Beladeposition 11 gelangen, in welcher sie mit Hilfe der Ablagemittel 5 befüllt werden können. Nach der vollständigen Befüllung der vier Endverpackungseinheiten 6, werden diese durch Rotieren des Drehtisches 15 wieder zurück in die Ausgangsposition gemäß Fig. 3b verdreht, aus welcher sie mit Hilfe des Übergabegreifers 14 wieder zurück auf das Förderband 12 gestellt werden, welches gleichzeitig ein Ausschleusförderband ist, wie dies aus Fig. 3e ersichtlich ist. Die gefüllten Endverpackungseinheiten 6 werden dann geeignet aus der Verpackungsvorrichtung 16 ausgeschleust.

In den Fig. 3a bis 3e sind die Endverpackungseinheiten 6 nur zur Verdeutlichung beabstandet auf dem Förderband dargestellt. Bevorzugt werden diese so antransportiert, dass diese gemeinsam mittels des Übergabegreifers 14 entnommen und auch gemeinsam wieder auf das Förderband 12 zurückverstellt werden können. Es ist auch denkbar, unterschiedliche Förderbänder 12 für den Antransport der leeren Endverpackungen und für den Abtransport der gefüllten Endverpackungen vorzusehen oder ein Förderband für den Antransport oder alternativ ein Förderband für den Abtransport, wobei dann An- oder Abtransport mit Hilfe anderer geeigneter Transportmittel, beispielsweise mit Hilfe von Greifern realisiert wird. Wesentlich ist lediglich, dass leere Endverpackungseinheiten dem Verpackungsprozess mit geeigneten Zuführmitteln zugeführt und nach dem Befüllen mit Hilfe von geeigneten Ausschleusemitteln wieder aus der Verpackungsvorrichtung 1 ausgeschleust werden. Auch der bevorzugte Drehtisch 15 ist hierzu lediglich fakultativ anzusehen und er kann auch ohne Förderbänder 12 eingesetzt werden oder es kann auch auf den Drehtisch 15 verzichtet werden, beispielsweise indem die Endverpackungseinheiten auf einem Förderband befüllt von diesem oder einem anderen Förderband wieder abtransportiert werden. Auch ist der vollständige Verzicht auf den Drehtisch 15 und/oder die Förderbänder 12 möglich, indem eine geeignete Handlingrobotik, beispielsweise mit Hilfe mindestens eines Greifers vorgesehen wird.

### Bezugszeichen

- 1: Spritzgussvorrichtung
- 2: Spritzgusswerkzeug
- 3: Kavitäten
- 4: Entnahmemittel
- 5: Ablagemittel
- 6: Endverpackungseinheiten
- 7: Untergruppen
- 8: Kunststoffspritzgussteile
- 9: Steuereinheit
- 10: Spritzgussanlage
- 11: Beladeposition
- 12: Förderband
- 13: Vorrat
- 14: Übergabegreifer
- 15: Drehtisch
- 16: Verpackungsvorrichtung

## Patentansprüche

1. Verpackungsverfahren zum Verpacken von als Pipettenspitzen oder medizinische Reaktionsgefäße ausgebildeten Kunststoffspritzgussteilen (8) in Endverpackungseinheiten (6), umfassend die Schritte:
- gleichzeitige Entnahme von K Spritzgussteilen aus K Kavitäten (3)
- gleichzeitige Ablage der K Kunststoffspritzgussteile (8), gleichmäßig verteilt auf U Untergruppen (7) mit Hilfe von einen Greifer umfassenden Ablagemitteln (5),
- mehrfaches Entnehmen von K Spritzgussteilen aus den K Kavitäten (3) und gleichmäßiges Verteilen der K Spritzgussteile auf die U Untergruppen (7), bis jede Untergruppe (7) L Kunststoffspritzgussteile (8) aufweist, wobei die Anzahl L der Kunststoffspritzgussteile (8) einer Untergruppe (7) der Anzahl A der in einer Endverpackungseinheit (6) maximal aufnehmbaren Kunststoffspritzgussteilen (8) oder einem ganzzahligen Teiler von A entspricht,
- Auffüllen mindestens einer Endverpackungseinheit (6) mit A Kunststoffspritzgussteilen (8), wobei das Ablegen der A Kunststoffspritzgussteile (8) in der mindestens einen Endverpackungseinheit (6) in einer, insbesondere horizontalen, Ablageebene erfolgt,
**dadurch gekennzeichnet,**
**dass** das Verteilen der K Kunststoffspritzgussteile (8) auf die Untergruppen (7) unter Verzicht auf eine Gruppierung der Kunststoffspritzgussteile (8) zu jeweils mehrere Kunststoffspritzgussteile (8) umfassenden Untergruppe in einem Zwischenspeicher ausschließlich beim Auffüllen der mindestens einen Endverpackungseinheit (6) in der Endverpackungseinheit (6) erfolgt, wobei hierzu die mindestens eine Endverpackungseinheit (6) schrittweise aufgefüllt wird und dabei so lange mehrfach hintereinander gleichzeitig K Kunststoffspritzgussteile (8) auf die Untergruppen (7) in der mindestens einen Endverpackungseinheit verteilt werden, bis die mindestens eine Endverpackungseinheit (6) vollständig mit jeweils A Kunststoffspritzgussteilen (8) befüllt ist.

2. Verpackungsverfahren nach Anspruch 1,
**dadurch gekennzeichnet,**
**dass** gleichzeitig K Endverpackungseinheiten (6) mit jeweils einer einzigen Untergruppe (7) mit L = A Kunststoffspritzgussteilen (8) befüllt werden oder dass in jeder Verpackungseinheit mindestens zwei Untergruppen (7) gleichzeitig aufgefüllt werden.

3. Verpackungsverfahren nach einem der Ansprüche 1 oder 2,
**dadurch gekennzeichnet,**
**dass** die K Kunststoffspritzgussteile (8) mittels eines Entnahmegreifers aus den K Kavitäten (3) entnommen werden und mittels des Entnahmegreifers oder mittels eines Übergabegreifers (14) mit dem die K Kunststoffspritzgussteile (8) von dem Entnahmegreifer übernommen werden, oder mittels eines weiteren Übergabegreifers (14), ohne Zwischenablage in einem, beispielsweise horizontalen, Zwischenpuffer, in der mindestens Endverpackungseinheit (6) auf die Untergruppen (7) verteilt abgelegt werden.

4. Verpackungsverfahren nach einem der Ansprüche 1 oder 2,
**dadurch gekennzeichnet,**
**dass** jeweils ausschließlich K Kunststoffspritzgussteile (8) vor der Verteilung auf die U Untergruppen (7) in einem Zwischenpuffer zwischengepuffert werden.

5. Verpackungsverfahren nach Anspruch 4,
**dadurch gekennzeichnet,**
**dass** die K Kunststoffspritzgussteile (8) mit samt des Zwischenpuffers zwischen einer Beladeposition (11), in der der Zwischenpuffer, vorzugsweise mit ausschließlich, K Kunststoffspritzgussteilen (8) beladen wird und einer Entnahmeposition, in der der Zwischenpuffer zum Verteilen der K Kunststoffspritzgussteile (8) auf die U Untergruppen (7) entleert wird, verstellt wird.

6. Verpackungsverfahren nach einem der Ansprüche 4 oder 5,
**dadurch gekennzeichnet,**
**dass** die K Kunststoffspritzgussteile (8) mittels eines Entnahmegreifers aus den K Kavitäten (3) entnommen werden und mittels des Entnahmegreifers oder mittels eines Übergabegreifers (14) mit dem die K Kunststoffspritzgussteile (8) von dem Entnahmegreifer übernommen werden oder mittels eines weiteren Übergabegreifers, in dem Zwischenpuffer abgelegt werden und/oder dass der Zwischenpuffer nach der Entnahme der K Kunststoffspritzgussteile (8) und vor dem Beladen der mindestens einen Endverpackungseinheit (6) aus der Entnahmeposition in Richtung der Beladeposition (11), insbesondere translatorisch oder rotatorisch, verstellt wird.

7. Verpackungsverfahren nach einem der vorhergehenden Ansprüche,
**dadurch gekennzeichnet,**
**dass** die Endverpackunsgeinheit(en) (6) derart ausgebildet ist/sind, dass diese in einem, insbesondere als Blutanalysegerät ausgebildeten, Analysegerät verwendbar sind.

8. Verpackungsverfahren nach einem der vorhergehenden Ansprüche,
**dadurch gekennzeichnet,**
**dass** die mit jeweils A Kunststoffspritzgussteilen (8) zu befüllenden Endverpackungseinheit(en) (6) einzeln oder in Gruppen in einer Umverpackung, insbesondere einen Umkarton und/oder eine Folienverpackung, verpackt werden.

9. Verpackungsverfahren nach einem der vorhergehenden Ansprüche,
**dadurch gekennzeichnet,**
**dass** die Endverpackung(en) (6) jeweils ein Trägerteil, insbesondere aus Metall, bevorzugt Aluminium oder Kunststoff, mit A Öffnungen oder mit A Aufsteckelementen zur Aufnahme der A Spritzgussteile aufweisen.

10. Verpackungsverfahren nach einem der vorhergehenden Ansprüche,
**dadurch gekennzeichnet,**
**dass** die Kunststoffspritzgussteile (8) einer bestimmten Kavität (3) oder aus bestimmten Kavitäten (3) immer in einer bestimmten Untergruppe (7) oder in bestimmten Untergruppen (7) abgelegt werden, wobei bevorzugt jede Untergruppe (7) ausschließlich Kunststoffspritzgussteile (8) einer einzigen Kavität (3) umfasst

11. Verpackungsverfahren nach einem der vorhergehenden Ansprüche,
**dadurch gekennzeichnet,**
**dass** jede Untergruppe (7) bei jedem Ablagezyklus immer um die gleiche Anzahl von Kunststoffspritzgussteilen (8), vorzugsweise um ein einziges Spritzgussteil, erweitert wird.

12. Verpackungsverfahren nach einem der vorhergehenden Ansprüche,
**dadurch gekennzeichnet,**
**dass** die Anzahl A einem ganzzahligen Vielfachen der Kavitätenzahl oder nicht einem ganzzahligem Vielfachen der Kavitätenzahl entspricht.

13. Verpackungsverfahren nach einem der vorhergehenden Ansprüche,
**dadurch gekennzeichnet,**
**dass** gleichzeitig nur eine einzige Endverpackungseinheit mit Kunststoffspritzgussteilen aufgefüllt wird und die Untergruppen in der einzigen Endverpackungseinheit gebildet werden, oder dass gleichzeitig mehrere Endverpackungseinheiten mit Kunststoffspritzgussteilen aufgefüllt und die Untergruppen in den mehreren Endverpackungseinheiten gebildet werden.

14. Verpackungsvorrichtung (16) zum Verpacken von als Pipettenspitzen oder medizinische Reaktionsgefäße ausgebildeten Kunststoffspritzgussteilen (8) in Endverpackungseinheiten (6), ausgebildet zur Durchführung eines Verpackungsverfahrens nach einem der vorhergehenden Ansprüche, umfassend:
- zum gleichzeitige Entnehmen von K Kunststoffspritzgussteilen (8) aus K Kavitäten (3) ausgebildete Entnahmemittel (4),
- zum gleichzeitige Ablegen der K Kunststoffspritzgussteile (8), gleichmäßig verteilt auf U Untergruppen (7), ausgebildete, einen Ablagegreifer umfassende Ablagemittel (5),
- Zuführmittel zum Zuführen von leeren Endverpackungseinheiten (6) sowie Ausschleusmitteln zum Ausschleusen von befüllten Endverpackungseinheiten (6) aus der Verpackungsvorrichtung (16),
o Steuermittel zum Ansteuern der Entnahmemittel (4) und/oder der Ablagemittel (5), die diese derart ansteuernd ausgebildet sind, dass
o mehrfach K Spritzgussteilen aus den K Kavitäten (3) entnehmbar und gleichmäßig auf die U Untergruppen (7) verteilbar sind, bis jede Untergruppe (7) L Kunststoffspritzgussteile (8) aufweist, wobei die Anzahl L der Kunststoffspritzgussteile (8) einer Untergruppe (7) der Anzahl A der in einer Endverpackungseinheit (6) maximal aufnehmbaren Kunststoffspritzgussteilen (8) oder einem ganzzahligen Teiler von A entspricht,
o und derart, dass mindestens eine Endverpackungseinheit (6) mit A Kunststoffspritzgussteilen (8) auffüllbar ist, wobei die A Kunststoffspritgussteile (8) in der mindestens einen Endverpackungseinheit (6) in einer, bevorzugt gemeinsamen, insbesondere horizontalen, Ablageebene ablegbar sind,
**dadurch gekennzeichnet,**
**dass** die Steuermittel die Ablagemittel (5) derart ansteuernd ausgebildet sind, dass das Verteilen der K Kunststoffspritzgussteile (8) auf die Untergruppen (7) unter Verzicht auf eine Gruppierung der Kunststoffspritzgussteile (8) zu jeweils mehrere Kunststoffspritzgussteile (8) umfassenden Untergruppen in einem Zwischenspeicher ausschließlich beim Auffüllen der mindestens einen Endverpackungseinheit (6) in der Endverpackungseinheit (6) erfolgt wobei hierzu die mindestens eine Endverpackungseinheit (6) schrittweise aufgefüllt wird und dabei so lange mehrfach hintereinander gleichzeitig K Kunststoffspritzgussteile (8) auf die Untergruppen (7) in der mindestens einen Endverpackungseinheit (6) verteilt werden, bis die mindestens eine Endverpackung vollständig mit A Kunststoffspritzgussteilen (8) befüllt ist.

15. Verpackungsvorrichtung nach Anspruch 14,
**dadurch gekennzeichnet,**
**dass** die Zuführmittel und/oder die Ausschleusmittel mindestens ein Transportband und/oder mindestens einen rotierbaren Tisch umfassen, mit dem/denen die Endverpackungen im leeren Zustand an eine Beladeposition (11) förderbar sind, an welcher diese jeweils mit den A Kunststoffspritzgussteilen (8) beladen werden und/oder mit dem/denen die befüllten Endverpackungen aus der Verpackungsvorrichtung (16) und ausschleusbar sind.

16. Spritzgussanlage mit einer K Kavitäten (3) zur gleichzeitigen Herstellung von K als Pipettenspitzen oder medizinische Reaktionsgefäße aufweisenden Spritzgussvorrichtung (1) und mit einer Verpackungsvorrichtung (16) nach einem der Ansprüche 13 oder 14.

17. Spritzgussanlage nach Anspruch 16,
**dadurch gekennzeichnet,**
**dass** der Verpackungsvorrichtung (16) eine Umverpackungsvorrichtung nachgeordnet ist, mit der die mittels der Verpackungsvorrichtung (16) befüllten Endverpackungen einzeln oder in Gruppen in eine Umverpackung, insbesondere aus Pappe oder Kunststoff, verpackbar sind.

## Claims

1. Packaging method for packaging plastics injection-moulded parts (8) configured as pipette tips or medical reaction vessels in finished packaging units (6) comprising the steps:
- simultaneously extracting K injection-moulded parts from K cavities (3)
- simultaneously depositing the K plastics injection-moulded parts (8), distributed equally among U subgroups (7) by means of depositing means (5) comprising a gripper,
- repeatedly extracting K injection-moulded parts from the K cavities (3) and distributing equally the K injection-moulded parts among the U subgroups (7) until each subgroup (7) has L plastics injection-moulded parts (8), wherein the number L of plastics injection-moulded parts (8) of a subgroup (7) corresponds to the maximum number A of plastics injection-moulded parts (8) which are able to be received in a finished packaging unit (6) or a whole-number divisor of A,
- filling at least one finished packaging unit (6) with A injection-moulded parts (8), wherein the deposit of A plastics injection-moulded parts (8) in the at least one finished packaging unit (6) takes place in a deposition plane, in particular a horizontal deposition plane,
**characterized in that**
the distribution of the K plastics injection-moulded parts (8) among the subgroups (7) takes place in the finished packaging unit (6) exclusively when filling the at least one finished packaging unit (6), by dispensing with a grouping of the plastics injection-moulded parts (8) into a subgroup respectively comprising a plurality of plastics injection-moulded parts (8) in temporary storage, wherein to this end the at least one finished packaging unit (6) is filled in a stepwise manner and at the same time K plastics injection-moulded parts (8) are successively and repeatedly distributed simultaneously among the subgroups (7) in the at least one finished packaging unit, until the at least one finished packaging unit (6) is completely filled with respective A plastics injection-moulded parts (8).

2. Packaging method according to Claim 1, **characterized in that** K finished packaging units (6) comprising in each case a single subgroup (7) are filled simultaneously with L = A plastics injection-moulded parts (8) or **in that** at least two subgroups (7) are filled simultaneously in each packaging unit.

3. Packaging method according to one of Claims 1 or 2, **characterized in that** the K plastics injection-moulded parts (8) are extracted by means of an extraction gripper from the K cavities (3) and by means of the extraction gripper or by means of a transfer gripper (14) by which the K plastics injection-moulded parts (8) are transferred from the extraction gripper, or by means of a further transfer gripper (14) without the temporary deposit in, for example horizontal, temporary storage, are deposited in the at least finished packaging unit (6) and distributed among the subgroups (7).

4. Packaging method according to one of Claims 1 or 2, **characterized in that** in each case exclusively K plastics injection-moulded parts (8) are stored temporarily in temporary storage before distribution among the U subgroups (7).

5. Packaging method according to Claim 4, **characterized in that** the K plastics injection-moulded parts (8) together with the temporary storage is moved between a loading position (11) in which the temporary storage is preferably loaded exclusively with K plastics injection-moulded parts (8) and an extraction position in which the temporary storage is emptied for distributing the K injection-moulded parts (8) among the U subgroups (7).

6. Packaging method according to one of Claims 4 or 5, **characterized in that** the K plastics injection-moulded parts (8) are extracted by means of an extraction gripper from the K cavities (3) and by means of the extraction gripper or by means of a transfer gripper (14), by which the K plastics injection-moulded parts (8) are transferred from the extraction gripper, or by means of a further transfer gripper, are deposited in the temporary storage and/or **in that** after the extraction of the K plastics injection-moulded parts (8) and before loading the at least one finished packaging unit (6) the temporary storage is displaced from the extraction position in the direction of the loading position (11), in particular in a translatory or rotational manner.

7. Packaging method according to one of the preceding claims, **characterized in that** the finished packaging unit(s) (6) is/are configured such that said unit(s) is/are able to be used in an analysis device which is configured, in particular, as a blood analysis device.

8. Packaging method according to one of the preceding claims, **characterized in that** the finished packaging unit(s) (6) to be filled by the respective A plastics injection-moulded parts (8) is/are packaged individually or in groups in an outer packaging, in particular an outer box and/or a film packaging.

9. Packaging method according to one of the preceding claims, **characterized in that** the finished packaging unit(s) (6) in each case comprises(comprise) a carrier part, in particular made of metal, preferably aluminium or plastics, with A openings or with A positioning elements for receiving the A injection-moulded parts.

10. Packaging method according to one of the preceding claims, **characterized in that** the plastics injection-moulded parts (8) of a specific cavity (3) or from specific cavities (3) are always deposited in a specific subgroup (7) or in specific subgroups (7), wherein preferably each subgroup (7) exclusively comprises plastics injection-moulded parts (8) of a single cavity (3).

11. Packaging method according to one of the preceding claims, **characterized in that** each subgroup (7) in each depositing cycle is always increased by the same number of plastics injection-moulded parts (8), preferably by a single injection-moulded part.

12. Packaging method according to one of the preceding claims, **characterized in that** the number A corresponds to a whole-number multiple of the number of cavities or does not correspond to a whole-number multiple of the number of cavities.

13. Packaging method according to one of the preceding claims, **characterized in that** only a single finished packaging unit is simultaneously filled with plastics injection-moulded parts and the subgroups are formed in the single finished packaging unit or that a plurality of finished packaging units are simultaneously filled with plastics injection-moulded parts and the subgroups are formed in the plurality of finished packaging units.

14. Packaging device (16) for the packaging of plastics injection-moulded parts (8) configured as pipette tips or medical reaction vessels in finished packaging units (6), configured for carrying out a packaging method according to one of the preceding claims, comprising:
- extraction means (4) configured for the simultaneous extraction of K plastics injection-moulded parts (8) from K cavities (3),
- depositing means (5) configured for simultaneously depositing K plastics injection-moulded parts (8) uniformly distributed among U subgroups (7) and comprising a depositing gripper,
- supply means for supplying empty finished packaging units (6) and ejection means for ejecting filled finished packaging units (6) from the packaging device (16),
o control means for activating the extraction means (4) and/or the depositing means (5) which are configured to activate said extraction means and/or depositing means, such that
o K injection-moulded parts are able to be repeatedly extracted from the K cavities (3) and at the same time are able to be distributed equally among the U subgroups (7) until each subgroup (7) has L plastics injection-moulded parts (8), wherein the number L of plastics injection-moulded parts (8) of a subgroup (7) corresponds to the maximum number A of plastics injection-moulded parts (8) able to be received in a finished packaging unit (6) or an integral divisor of A,
o and such that at least one finished packaging unit (6) is able to be filled with A plastics injection-moulded parts (8), wherein the A plastics injection-moulded parts (8) are able to be deposited in the at least one finished packaging unit (6) in a preferably common, in particular horizontal, deposition plane,
**characterized in that**
the control means are configured to activate the depositing means (5), such that the distribution of the K plastics injection-moulded parts (8) among the subgroups (7) takes place in the finished packaging unit (6) exclusively when filling the at least one finished packaging unit (6), by dispensing with a grouping of the plastics injection-moulded parts (8) among subgroups respectively comprising a plurality of plastics injection-moulded parts (8) in temporary storage, wherein to this end the at least one finished packaging unit (6) is filled in a stepwise manner and K plastics injection-moulded parts (8) are successively and repeatedly distributed simultaneously among the subgroups (7) in the at least one finished packaging unit (6), until the at least one finished packaging is filled completely with A plastics injection-moulded parts (8).

15. Packaging device according to Claim 14, **characterized in that** the supply means and/or the ejection means comprise at least one transport belt and/or at least one rotatable table, the finished packaging units in the empty state being able to be conveyed thereby to a loading position (11) in which said finished packaging units are respectively loaded with the A plastics injection-moulded parts (8) and/or the filled finished packaging units being able to be ejected thereby from the packaging device (16).

16. Injection-moulding machine with an injection-moulding device (1) comprising K cavities (3) for the simultaneous production of K as pipette tips or medical reaction vessels and with a packaging device (16) according to one of Claims 13 or 14.

17. Injection-moulding machine according to Claim 16, **characterized in that** an outer packaging device is arranged downstream of the packaging device (16) by which the finished packaging units filled by means of the packaging device (16) are able to be packaged individually or in groups into outer packaging, in particular made of cardboard or plastics.

## Revendications

1. Procédé d'emballage pour emballer des pièces moulées par injection de matière plastique (8) réalisées sous la forme de pointes de pipette ou de récipients de réaction médicaux dans des unités d'emballage définitif (6), comprenant les étapes suivantes :
- prélèvement simultané de K pièces moulées par injection hors de K cavités (3) ;
- rangement simultané des K pièces moulées par injection de matière plastique (8), réparties de façon uniforme sur U sous-groupes (7), à l'aide de moyens de rangement (5) comprenant un grappin ;
- prélèvement multiple de K pièces moulées par injection hors des K cavités (3) et répartition uniforme des K pièces moulées par injection sur les U sous-groupes (7), jusqu'à ce que chaque sous-groupe (7) comporte L pièces moulées par injection de matière plastique (8), le nombre L de pièces moulées par injection de matière plastique (8) d'un sous-groupe (7) correspondant au nombre A de pièces moulées par injection de matière plastique (8) pouvant être reçues au maximum dans une unité d'emballage définitif (6) ou à un diviseur entier de A ;
- remplissage d'au moins une unité d'emballage définitif (6) avec A pièces moulées par injection de matière plastique (8), le rangement des A pièces moulées par injection de matière plastique (8) dans l'au moins une unité d'emballage définitif (6) se produisant dans un plan de rangement, notamment horizontal ;
**caractérisé en ce que** :
la répartition des K pièces moulées par injection de matière plastique (8) sur les sous-groupes (7) s'effectue en renonçant à un regroupement des pièces moulées par injection de matière plastique (8) en respectivement un sous-groupe comprenant plusieurs pièces moulées par injection de matière plastique (8) dans un accumulateur intermédiaire, exclusivement lors du remplissage de l'au moins une unité d'emballage définitif (6) dans l'unité d'emballage définitif (6), l'au moins une unité d'emballage définitif (6) étant remplie à cette fin par étapes et en l'occurrence, autant de fois nécessaires pour que les K pièces moulées par injection de matière plastique (8) soient simultanément réparties à plusieurs reprises les unes après les autres sur les sous-groupes (7) dans l'au moins une unité d'emballage définitif pour que l'au moins une unité d'emballage définitif (6) soit entièrement remplie de respectivement A pièces moulées par injection de matière plastique (8).

2. Procédé d'emballage selon la revendication 1, **caractérisé en ce que** simultanément K unités d'emballage définitif (6) sont remplies respectivement avec un seul sous-groupe (7) avec L = A pièces moulées par injection de matière plastique (8) ou que simultanément au moins deux sous-groupes (7) sont remplis dans chaque unité d'emballage.

3. Procédé d'emballage selon l'une quelconque des revendications 1 ou 2, **caractérisé en ce que** les K pièces moulées par injection de matière plastique (8) sont prélevées à l'aide d'un grappin de prélèvement hors des K cavités (3) et transférées à l'aide du grappin de prélèvement ou à l'aide d'un grappin de transfert (14) à l'aide duquel les K pièces moulées par injection de matière plastique (8) sont transférées à partir du grappin de prélèvement, ou sont rangées de façon répartie à l'aide d'un grappin de transfert (14) supplémentaire, sans rangement intermédiaire dans un tampon intermédiaire, par exemple horizontal, dans l'au moins une unité d'emballage définitif (6) sur les sous-groupes (7) de façon.

4. Procédé d'emballage selon l'une quelconque des revendications 1 ou 2, **caractérisé en ce que** respectivement exclusivement K pièces moulées par injection de matière plastique (8) sont stockées temporairement dans un tampon intermédiaire avant la répartition sur les U sous-groupes (7).

5. Procédé d'emballage selon la revendication 4, **caractérisé en ce que** les K pièces moulées par injection de matière plastique (8) sont déplacées, avec l'ensemble du tampon intermédiaire, entre une position de chargement (11) dans laquelle le tampon intermédiaire est chargé, de préférence avec exclusivement K pièces moulées par injection de matière plastique (8), et une position de prélèvement dans laquelle le tampon intermédiaire est vidé sur les U sous-groupes (7) pour la répartition des K pièces moulées par injection de matière plastique (8).

6. Procédé d'emballage selon l'une quelconque des revendications 4 ou 5, **caractérisé en ce que** les K pièces moulées par injection de matière plastique (8) sont prélevées à l'aide d'un grappin de prélèvement hors des K cavités (3) et sont rangées dans le tampon intermédiaire, à l'aide du grappin de prélèvement ou à l'aide d'un grappin de transfert (14) à l'aide duquel les K pièces moulées par injection de matière plastique (8) sont transférées à partir du grappin de prélèvement ou sont rangées à l'aide d'un grappin de transfert supplémentaire et/ou que le tampon intermédiaire est déplacé après le prélèvement des K pièces moulées par injection de matière plastique (8) et avant le chargement de l'au moins une unité d'emballage définitif (6) hors de la position de prélèvement en direction de la position de chargement (11), notamment translationnellement ou rotativement.

7. Procédé d'emballage selon l'une quelconque des revendications précédentes, **caractérisé en ce que** la ou les unités d'emballage définitif (6) sont réalisés de telle sorte qu'elles peuvent servir d'appareil d'analyse, notamment réalisé sous la forme d'un appareil d'analyse sanguine.

8. Procédé d'emballage selon l'une quelconque des revendications précédentes, **caractérisé en ce que** la ou les unités d'emballage définitif (6) à remplir respectivement de A pièces moulées par injection de matière plastique (8) sont remplies individuellement ou en groupes dans un suremballage, notamment un suremballage en carton et/ou un emballage pelliculaire.

9. Procédé d'emballage selon l'une quelconque des revendications précédentes, **caractérisé en ce que** le ou les emballages définitifs (6) comportent respectivement une partie de support, notamment en métal, de façon préférée en aluminium ou en matière plastique, avec A ouvertures ou avec A éléments de logement destinés à loger les A pièces moulées par injection.

10. Procédé d'emballage selon l'une quelconque des revendications précédentes, **caractérisé en ce que** les pièces moulées par injection de matière plastique (8) d'une cavité (3) définie ou de cavités (3) définies sont toujours rangées dans un sous-groupe (7) défini ou dans des sous-groupes (7) définis, de façon préférée chaque sous-groupe (7) comprenant exclusivement les pièces moulées par injection de matière plastique (8) d'une cavité (3) unique.

11. Procédé d'emballage selon l'une quelconque des revendications précédentes, **caractérisé en ce que** chaque sous-groupe (7) est toujours élargi à chaque cycle de rangement du même nombre de pièces moulées par injection de matière plastique (8), de préférence d'une seule pièce moulée par injection.

12. Procédé d'emballage selon l'une quelconque des revendications précédentes, **caractérisé en ce que** le nombre A correspond à un multiple entier du nombre de cavités ou ne correspond pas à un multiple entier du nombre de cavités.

13. Procédé d'emballage selon l'une quelconque des revendications précédentes, **caractérisé en ce que** simultanément une seule unité d'emballage définitif est remplie de pièces moulées par injection de matière plastique et que les sous-groupes sont formés dans la seule unité d'emballage définitif ou que plusieurs unités d'emballage définitif sont remplies simultanément de pièces moulées par injection de matière plastique et que les sous-groupes sont formés dans plusieurs unités d'emballage définitif.

14. Dispositif d'emballage (16) pour emballer des pièces moulées par injection de matière plastique (8) réalisées sous la forme de pointes de pipette ou de récipients de réaction médicaux dans des unités d'emballage définitif (6), réalisé pour mettre en oeuvre un procédé d'emballage selon l'une quelconque des revendications précédentes, comprenant :
- des moyens de prélèvement (4) réalisés pour le prélèvement simultané de K pièces moulées par injection de matière plastique (8) hors de K cavités (3) ;
- des moyens de rangement (5) comprenant un grappin de rangement pour le rangement simultané des K pièces moulées par injection de matière plastique (8), uniformément réparties sur U sous-groupes (7) ;
- des moyens d'amenée pour amener des unités d'emballage définitif (6) vides ainsi que des moyens d'évacuation pour évacuer les unités d'emballage définitif (6) remplies hors du dispositif d'emballage (16) ;
- des moyens de commande pour commander les moyens de prélèvement (4) et/ou les moyens de rangement (5), ces moyens de commande étant réalisés de telle sorte que :
K pièces moulées par injection peuvent être prélevées à de multiples reprises hors des K cavités (3) et être réparties uniformément sur les U sous-groupes (7), jusqu'à ce que chaque sous-groupe (7) comporte L pièces moulées par injection de matière plastique (8), le nombre L de pièces moulées par injection de matière plastique (8) du sous-groupe (7) correspondant au nombre A de pièces moulées par injection de matière plastique (8) pouvant être reçues au maximum dans une unité d'emballage définitif (6) ou à un diviseur entier de A ; et
de telle sorte qu'au moins une unité d'emballage définitif (6) est remplie de A pièces moulées par injection de matière plastique (8), les A pièces moulées par injection de matière plastique (8) pouvant être rangées dans un plan de rangement de l'au moins une unité d'emballage définitif (6), de façon préférée commun, notamment horizontal ;
**caractérisé en ce que** :
les moyens de commande commandent de telle sorte les moyens de rangement (5) que la répartition des K pièces moulées par injection de matière plastique (8) sur les sous-groupes (7) s'effectue en renonçant à un regroupement des pièces moulées par injection de matière plastique (8) en sous-groupes comprenant respectivement plusieurs pièces moulées par injection de matière plastique (8) dans un accumulateur intermédiaire, exclusivement lors du remplissage de l'au moins une unité d'emballage définitif (6) dans l'unité d'emballage définitif (6), l'au moins une unité d'emballage définitif (6) étant remplie à cette fin par étapes et en l'occurrence, autant de fois nécessaires pour que les K pièces moulées par injection de matière plastique (8) soient simultanément réparties à plusieurs reprises les unes après les autres sur les sous-groupes (7) dans l'au moins une unité d'emballage définitif pour que l'au moins une unité d'emballage définitif (6) soit entièrement remplie de respectivement A pièces moulées par injection de matière plastique (8).

15. Dispositif d'emballage selon la revendication 14, **caractérisé en ce que** les moyens d'amenée et/ou les moyens d'évacuation comprennent au moins un tapis de transport et/ou au moins une table pivotable à l'aide duquel ou de laquelle les emballages définitifs peuvent être transportés à l'état vide au niveau d'une position de chargement (11) au niveau de laquelle ils sont respectivement chargés de A pièces moulées par injection de matière plastique (8) et/ou à l'aide duquel ou de laquelle les emballages définitifs peuvent être évacués du dispositif d'emballage (16).

16. Installation de moulage par injection avec un dispositif de moulage par injection (1) comportant K cavités (3) pour la fabrication simultanée de K pointes de pipette ou récipients de réaction médicaux et avec un dispositif d'emballage (16) selon l'une quelconque des revendications 13 ou 14.

17. Installation de moulage par injection selon la revendication 16, **caractérisée en ce qu'**un dispositif de suremballage avec lequel les emballages définitifs remplis à l'aide du dispositif d'emballage (16) peuvent être emballés individuellement ou en groupes dans un suremballage, notamment en carton ou en matière plastique, est placé en aval du dispositif d'emballage (16).
